Europäisches Patentamt

European Patent Office

Office européen des brevets

(19)

(11) **EP 1 377 039 A2**

(12) **EUROPEAN PATENT APPLICATION**

(43) Date of publication:
**02.01.2004 Bulletin 2004/01**

(51) Int Cl.⁷: **H04N 5/225**, G02B 27/00

(21) Application number: **03253908.2**

(22) Date of filing: **20.06.2003**

| | |
|---|---|
| (84) Designated Contracting States: **AT BE BG CH CY CZ DE DK EE ES FI FR GB GR HU IE IT LI LU MC NL PT RO SE SI SK TR** Designated Extension States: **AL LT LV MK** (30) Priority: **24.06.2002 JP 2002182934** (71) Applicant: **CANON KABUSHIKI KAISHA Tokyo (JP)** | (72) Inventors: • **The inventor has agreed to waive his entitlement to designation.** (74) Representative: **Beresford, Keith Denis Lewis et al BERESFORD & Co. 16 High Holborn London WC1V 6BX (GB)** |

(54) **Compound eye image pickup apparatus and electronic apparatus equipped therewith**

(57) A compound eye image pickup apparatus which enables a single, continuous entire object image to be obtained from a plurality of partial object images taken by a plurality of image pickup regions, is disclosed. The compound eye image pickup apparatus comprises a compound eye optical element which has a plurality of lens portions, each with converging optical power; and an image pickup element which performs photoelectric conversion of images of a plurality of regions of an object formed respectively by the plurality of lens portions, at mutually different image pickup regions. The apparatus furthermore comprises an image combining circuit performing a process of combining an image of an entire object from a plurality of images respectively obtained from the abovementioned plurality of image pickup regions.

FIG. 1(A)

EP 1 377 039 A2

**Description**

This invention relates to a compound eye image pickup apparatus that takes an object image by means of a compound eye optical element, in which a plurality of lens portions is collectively grouped.

Among such compound eye image pickup apparatuses as mentioned above, there has been proposed priorly an apparatus with which the respective optical axes of the plurality of lens portions are tilted with respect to each other and images of mutually different regions of an object (referred to hereinafter as "partial object images") are taken via the respective lens portions to obtain an image of the entire object.

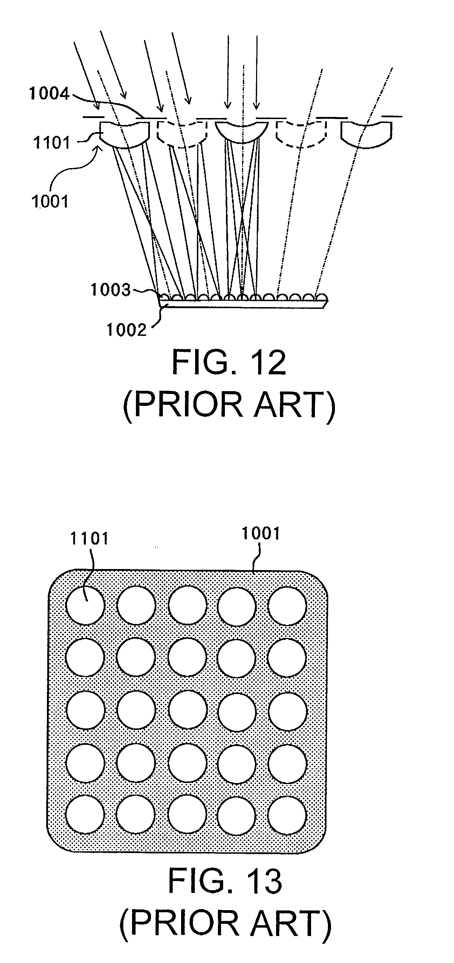

Fig. 12 is a diagram, showing the cross section of the abovementioned compound eye image pickup apparatus. In the Figure, 1001 is a compound eye optical element, in which a plurality of lens portions, each of which faces to an object (not shown) and has converging optical power, is arranged in one group, numerical reference 1002 is an image pickup element, comprising a CCD or CMOS sensor, etc., numerical reference 1003 indicates microlenses, which converge light flux from the object onto image pickup element 1002, and numerical reference 1004 indicates an aperture stop.

The light flux from the unillustrated object passes through the respective aperture portions of the aperture stop 1004 and the respective lens portions of the compound eye optical element 1001, is converged by the microlenses 1003, and forms images on the image pickup element 1002. The light flux that formed images is converted by the image pickup element 1002 into electrical signals that are in accordance with the reflectance of the object, and object image signals are obtained by analog/digital conversion of these electrical signals.

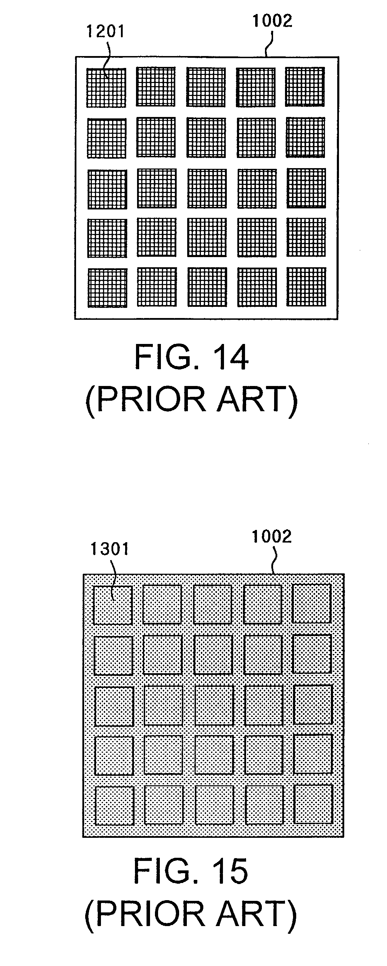

Fig. 13 is a front view of the compound eye image pickup element 1001 shown in Fig. 12. As mentioned above, the compound eye image pickup element 1001 comprises a plurality of lens portions 1101. As shown in Fig. 12, the respective optical axes of the lens portions 1101 are tilted with respect to each other and each lens portion 1101 has a different field region (image pickup region).

Here, the optical axes of the respective lens portions 1101 refer to the axes expressed by the light rays that enter the respective individual lens portions 1101 through the centers of the respective aperture portions of the aperture stop 1004 and reach the centers of the image pickup regions that are formed in one-to-one correspondence with the individual lens portions. The same shall apply in the description of Embodiments of the present invention as well.

Fig. 14 is a front view of the image pickup element 1002 shown in Fig. 12. A plurality of image pickup regions 1201, each comprising a plurality of photoelectric conversion elements (pixels), are formed on the image pickup element 1002, and each individual image pickup region 1201 is spaced by a predetermined interval and positioned in one-to-one correspondence with respect to each individual lens portion 1101. The partial object images formed by the respective lens portions 1101 are formed on the respective image pickup regions 1201.

Meanwhile, Fig. 15 shows an image pickup element 1002, with which substantially the entire surface is a region enabled to perform image pickup and the partial object images formed by the individual lens portions 1101 are formed on the image pickup element 1002 without overlapping mutually, that is, on the respective rectangular regions 1301 shown in the Figure.

The plurality of partial object images formed by the plurality of lens portions 1101 of the compound eye optical element 1001 as shown in Fig. 14 are respectively taken (photoelectrically converted) by the plurality of image pickup regions 1201 on the image pickup element 1002, and in order to obtain a single, entire object image from these plurality of partial object images, a process of combining the partial object images taken at the respective image pickup regions 1201 must be performed.

Also, when as shown in Fig. 15, the image pickup regions 1301 corresponding to the respective lens portions 1101 and non-image-forming regions coexist within a single image-pickup-enabled region, designation of the image pickup regions 1301 and a process of combining the images taken by the respective image pickup regions 1301 are essential for obtaining a single, entire object image.

Furthermore, since each of the plurality of lens portions provided in the compound eye optical element 1001 has its own aberrations, if the images taken by adjacent image pickup regions 1003 are simply combined, there will be a discontinuity at the joined part.

An object of the present invention is to provide a compound eye image pickup apparatus, with which a continuous, single, entire object image can be obtained from a plurality of partial object images taken by a plurality of image pickup regions, and an information terminal apparatus or other electronic apparatus equipped with this compound eye image pickup apparatus.

The compound eye image pickup apparatus of the present invention includes a compound eye optical element in which a plurality of lens portions, each of which faces to an object and has converging optical power, are collectively grouped. And the apparatus also includes an image pickup element which performs photoelectric conversion of images of a plurality of regions of an object at mutually different image pickup regions. This apparatus further includes an image combination circuit which performs a combining process of combining an image of the entire object from a plurality of images respectively obtained from the plurality of image pickup regions.

Characteristics of the compound eye image pickup apparatus of the present invention shall become apparent through the following description of the specific embodiments, which are described by way of example only, with reference to the accompanying drawings in which:

Fig. 1(A) is a block diagram showing the structure of a compound eye image pickup apparatus, which is Embodiment 1 of the present invention, Fig. 1(B) is a sectional view showing the structure of an image pickup optical system of the compound eye image pickup apparatus,

Fig. 2(A) is a sectional view of the compound eye image pickup apparatus of Embodiment 1, Fig. 2(B) is a sectional view of an image pickup apparatus using a single lens,

Fig. 3(A) is a diagram for explaining the relationship of image formation for an object image in the image pickup apparatus using a single lens, Fig. 3(B) is a diagram for explaining relationship of the image formation for an object image in the image pickup apparatus using a compound eye lens,

Fig. 4(A) is a diagram showing the manner of object partition by the compound eye optical element used in Embodiment 1, Fig. 4(B) is a diagram showing the partitioned images on the image pickup surface,

Figs. 5(A) and (B) are diagrams for explaining the combining process by the compound eye image pickup apparatus of Embodiment 1, Fig. 5(C) is a table indicating the positional relationship after rearrangement of the respective partitioned images,

Figs. 6(A) through (F) are diagrams showing the combining process of the compound eye image pickup apparatus of Embodiment 1,

Fig. 7 is a block diagram showing the structure of a compound eye pickup apparatus of Embodiment 2 of the present invention,

Fig. 8(A) is a diagram showing the image pickup regions for taking object regions with overlapping parts in the compound eye image pickup apparatus of Embodiment 2, Fig. 8(B) is a diagram showing a template and a search region used in searching corresponding points in images having overlapping parts,

Fig. 9 is a block diagram showing the structure of a compound eye pickup apparatus of Embodiment 3 of the present invention,

Fig. 10 is a perspective view showing a card type camera, which is Embodiment 4 of the present invention,

Fig. 11 is a perspective view showing a notebook type personal computer equipped with a compound eye image pickup apparatus, which is Embodiment 5 of the present invention,

Fig. 12 is a sectional view showing a prior-art image pickup apparatus,

Fig. 13 is a front view showing a prior-art image pickup element,

Fig. 14 is a front view showing a prior-art image pickup element, and

Fig. 15 is a front view, showing a prior-art image pickup element.

Embodiments of this invention shall now be described with reference to the drawings.

(Embodiment 1)

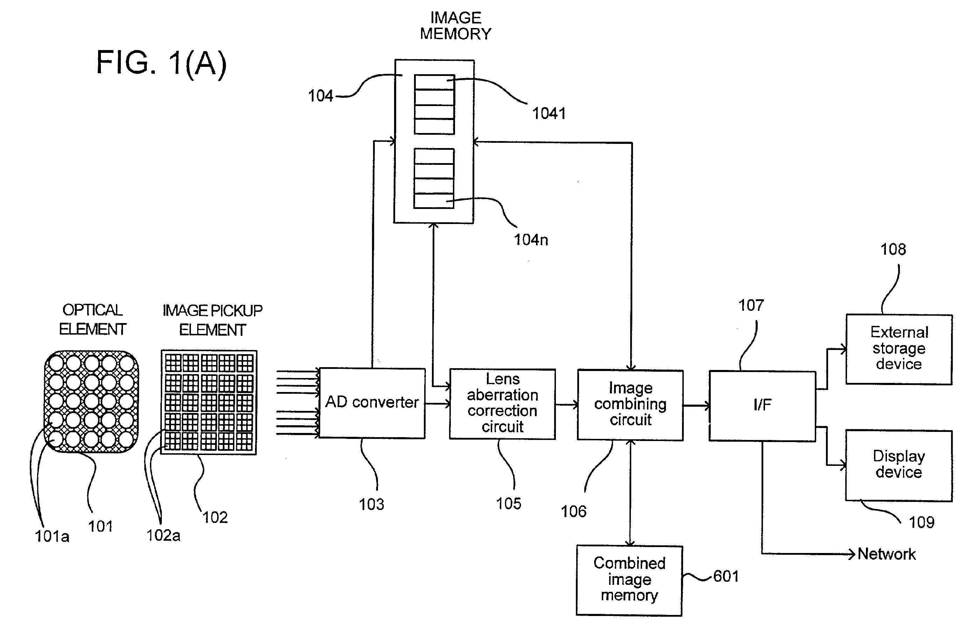

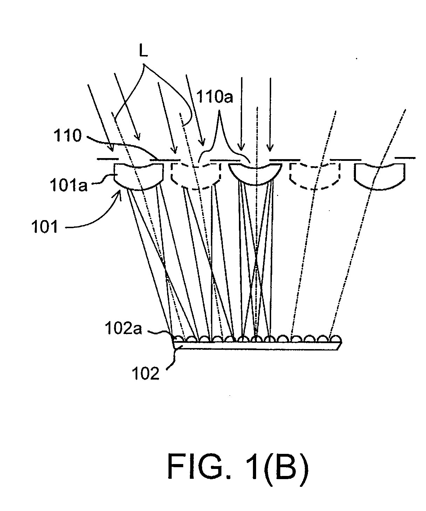

Fig. 1(A) shows the structure of a compound eye image pickup apparatus, which is Embodiment 1 of the present invention. Fig. 1(B) shows the structure of an image pickup optical system of the compound eye image pickup apparatus.

In Fig. 1(A), numerical reference 101 denotes a compound eye optical element in which a plurality of lens portions 101a are collectively grouped (arranged in juxtaposition). Each of the lens portions 101a faces to an object (not shown) and has optical power to converge a light flux from the object. Numerical reference 102 denotes an image pickup element which includes photoelectric conversion elements (pixels) that perform photoelectric conversion of an object image formed by the compound eye optical element 101 and generate analog electrical signals. The image pickup element 102 is constituted of a CCD or CMOS sensor, etc.

A plurality of image pickup regions 102a are arranged on the image pickup element 102 so as to correspond in a one-to-one manner to the respective lens portions 101a of the compound optical element 101. Each image pickup region 102a includes a plurality of pixels.

As shown in Fig. 1(B), the image pickup optical system which includes the compound eye optical element 101 and the image pickup element 102, is arranged in the same manner as the prior-art image pickup optical system, which was described using Figs. 12 through 14 and includes the compound eye optical element 1001 and the image pickup element 1002.

That is, the light flux from the object passes through aperture portions 110a formed in an aperture stop 110 and the lens portions 101a arranged on the compound eye optical element 101, are converged by microlenses 102a formed on the image pickup element 102, and forms images on the image pickup element 102. The image-formed light flux is converted by the image pickup element 102 into electrical signals that are in accordance with the reflectance of the object and are thereafter electrically processed as shall be described later.

As shown in Fig. 1(B), the optical axes L of the respective lens portions 101a are tilted mutually and each lens portion 101a has a different field region (image pickup region).

As the image pickup element 102, an image pickup element, with which the entire surface is a region enabled to perform image pickup, may be used as was shown in Fig. 15.

In Fig. 1(A), numerical reference 103 denotes an A/D converter, which converts the analog signals output from the image pickup element 102 into digital image signals. Numerical reference 104 denotes an image memory which temporarily stores and holds the image signals, which have been converted into digital signals and express partial images of the object (referred to hereinafter as "partial object image") that are obtained by the respective image pickup regions 102a.

Numerical reference 105 denotes a lens aberration correction circuit which corrects the distortion components that arise in the partial object images obtained at the respective image pickup regions 102a due to optical aberrations of the respective individual lens portions 101a.

Numerical reference 106 denotes a combining process circuit which performs the process of combining the image signals that express the plurality of partial object images obtained at the respective image regions 102a and stored and held in the image memory 104 into image signals that express a single, entire image of the object.

Numerical reference 107 denotes an interface (output unit) with an external storage device 108 or a display device 109 which records or displays the image signals that express the combined entire object image.

The operations of the compound eye image pickup apparatus of this embodiment shall now be described. Here, the operations of an image pickup apparatus for taking still images, by which an object's entire image that forms a single continuous image is obtained in a single image-taking operation of the compound eye image pickup apparatus, shall be described. The processes and operations described below may be repeated at a certain rate in a moving image pickup apparatus that takes frame images (that is, moving images) that are continuous in time in a single image-taking operation.

When a photographer turns on an unillustrated power switch, the lens portions 101a, which are arranged on the compound eye optical element 101 and have different field regions (image pickup regions), respectively makes the light fluxes from the object form images (partial object images) onto the corresponding image pickup regions 102a on the image pickup element 102.

Analog electrical signals, corresponding to the exposure amounts due to the light fluxes from the object, are generated from the respective image pickup regions 102a of the image pickup element 102.

The analog electrical signals that are output from the respective image pickup regions 102a of the image pickup element 102 are subject to such processes as amplification of the output signals by a gain amplifier, sample holding, etc., by an unillustrated analog image processing circuit and are then converted by the AD converter 103 into digital image signals that express partial object images.

The partial object images that have been converted into digital image signals are stored and held once in the image memory 104. In the image memory 104, memory areas (addresses) are partitioned according to the image pickup regions 102a of the image pickup element 102 and the respective memory areas 1041, 1042, ··· 104n (n = 1, 2, 3 ···) are provided with identifiers.

The respective memory areas 1041, 1042, ··· 104n are provided to correspond to the lens portions 101a corresponding to the respective image pickup regions 102a and to store and hold data (information) concerning the aberrations (in the present embodiment, coordinate conversion expressions for the aberration correction to be described below) of the corresponding lens portions.

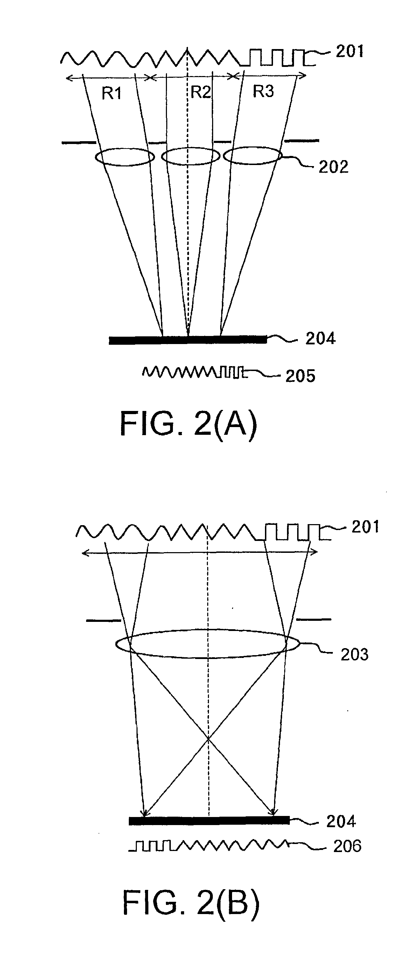

The relationship of image formation unique to the compound eye image pickup apparatus of the present embodiment shall now be described using Figs. 2.

Fig. 2(A) shows an image pickup apparatus using a compound eye lens, which corresponds to the compound eye optical element in the present embodiment, and Fig. 2(B) shows an image pickup apparatus using a single lens for comparison with the present embodiment.

In these Figures, numerical reference 201 indicates the density distribution of an object plane and with both of the image pickup optical systems shown in Figs. 2(A) and 2(B), an object image with the density distribution corresponding to the object density 201 is formed on an image pickup element 204.

In Fig. 2(A), a compound eye lens 202 partitions the object into three regions R1, R2, and R3, indicated in the figure by the arrows, by means of the respective lens portions and makes the respective partial object images 205 form onto an image pickup plane 204. In this process, the respective lens portions form the respective partial object images as inverted images on the image pickup plane 204.

Meanwhile in Fig. 2(B), a single lens 203 forms an inverted image (object image 206) of the entire object on an image pickup plane 204.

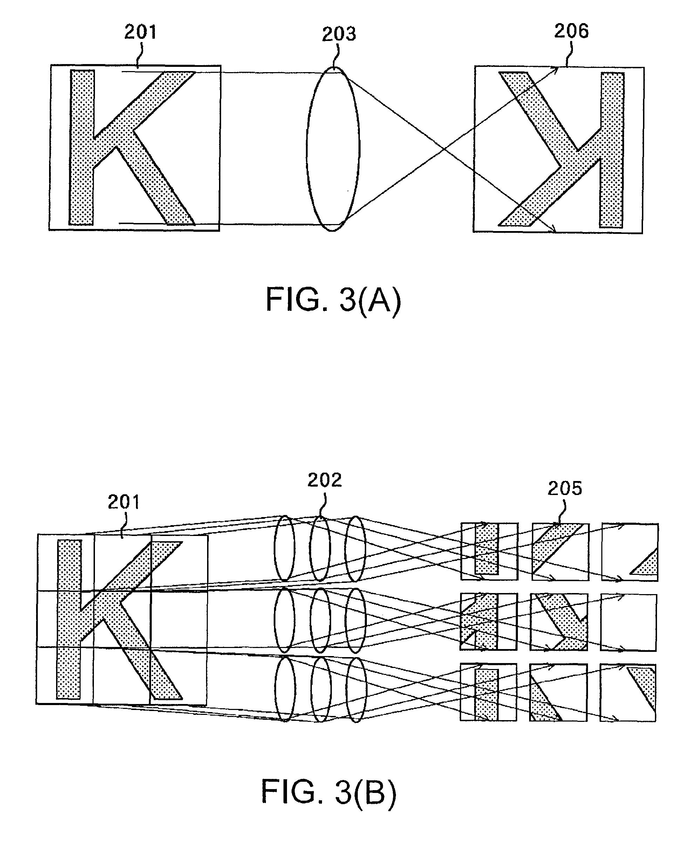

In order to further clarify this relationship, the image formation by the compound eye lens and the single lens for a two-dimensional planar object shall be described and compared using Figs. 3(A) and (B).

In both Figures, the object 201 is the character "K" drawn on a flat surface. With the single lens 203 shown in Fig. 3(A), the entire object "K" is handled as a single field region and the inverted image 206 of the entire object "K" is formed on the image pickup element.

Meanwhile, as shown in Fig. 3(B), with the compound eye lens 202, in which the lens portions are arranged in three rows and three columns, the object 201 is partitioned into nine regions corresponding to the lens portions as illustrated in the figure and the inverted images 205 of the respective partial object images are formed on the image pickup element.

Unlike the object image 206 of Fig. 3(A) formed by the single lens 203, the object images 206 of Fig. 3 (B) formed by the compound eye lens 202, are arranged so as to be point symmetric with the center of the image formed by the central lens portion as the center. The plurality of partial object images that are formed on the image pickup element must thus be rearranged in the combining process so as to provide a continuous, single, entire object image such as the object image 206 in Fig. 3 (A).

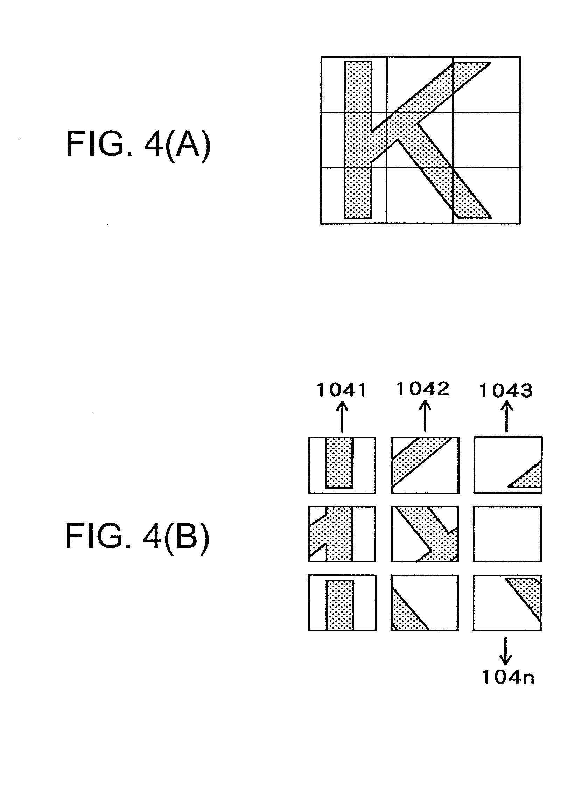

Fig. 4(A) shows the abovementioned object of the character "K." This object is divided into nine regions and partial object images of these nine object regions are formed onto the image pickup element 102 by the compound eye optical element 101 and are taken by the image pickup element 102.

Fig. 4(B) is a diagram showing the partial object images that have been partitioned and taken, and the partial object images are respectively stored and held in the memory areas 1041, 1042, ··· 104n of the image memory 104 shown in Fig. 1 (A).

The partial object images stored in the image memory 104 are subject to the correction of distortion, resulting from aberrations of the respective lens portions 101a, by the lens aberration correction circuit 105.

Generally when a single combined image is formed from a plurality of images, a single camera is panned or tilted to capture different field regions that are adjacent each other or n cameras of the same specifications are used to capture different regions that are adjacent each under the same image taking conditions, etc., and the plurality of images thus obtained are combined.

In such a case, though distortions due to aberration of the lens occur in the plurality of images, the same aberration correction expressions may be applied to the same field angle region in the respective images.

On the other hand, the lens portions 101a of the compound eye optical element 101 of the present embodiment differ from each other in the lens characteristics and also differ from each other in the aberrations.

Thus at the lens aberration correction circuit 105, aberration correction is performed individually for each partial object image stored in the memory areas 1041 to 104n of the image memory 104.

Though various methods have been proposed in regard to the aberration correction of images, the distortion of each image is especially a problem in image combination, and thus distortion correction is performed in the present embodiment. However, the other aberrations may be corrected for more rigorous image combination as well.

For distortion correction, the correction may be carried out by a coordinate conversion in many cases, and thus a coordinate conversion expression, which is based on lens design values or has been modified by using experimental values based on the lens design values, is prepared in advance for each lens portion 101a. The coordinate conversion expressions, which have been prepared according to the lens portions 101a, are stored and held in the image memory 104 in correspondence to the respective lens portions 101a.

At the lens aberration correction circuit 105, the partial object images stored in the memory areas 1041 to 104n and the coordinate conversion expressions unique to the lens portions 101a corresponding to these partial object images are read sequentially from the image memory 104, the distortion corrections are performed, and the corrected partial object images are stored in the respective memory areas again.

The partial object images that have been subject to aberration correction at the lens aberration correction circuit 105 are then input into the image combining circuit 106, where the combining process which combines the partial object images into a single, entire object image is performed.

At the image combining circuit 106, first, the correspondence of the partial object images that are to be made adjacent each other and joined is determined for the plurality of partial object images stored in the image memory 104. That is, as mentioned above and as shown in Fig. 4(B), since the partial object images that are formed onto the image pickup plane by the individual lens portions 101a of the compound eye optical element 101 are inverted images and are arranged in a point symmetric manner with the center of the image formed by the central lens portion 101a as the center, the entirety of the original object thus cannot be reproduced accurately by simply joining together adjacent partial object images as they are.

A process which corresponds to rearrangement is thus performed prior to joining these partial object images together and the respective positional relationships are stored in the image memory 104 or another unillustrated memory.

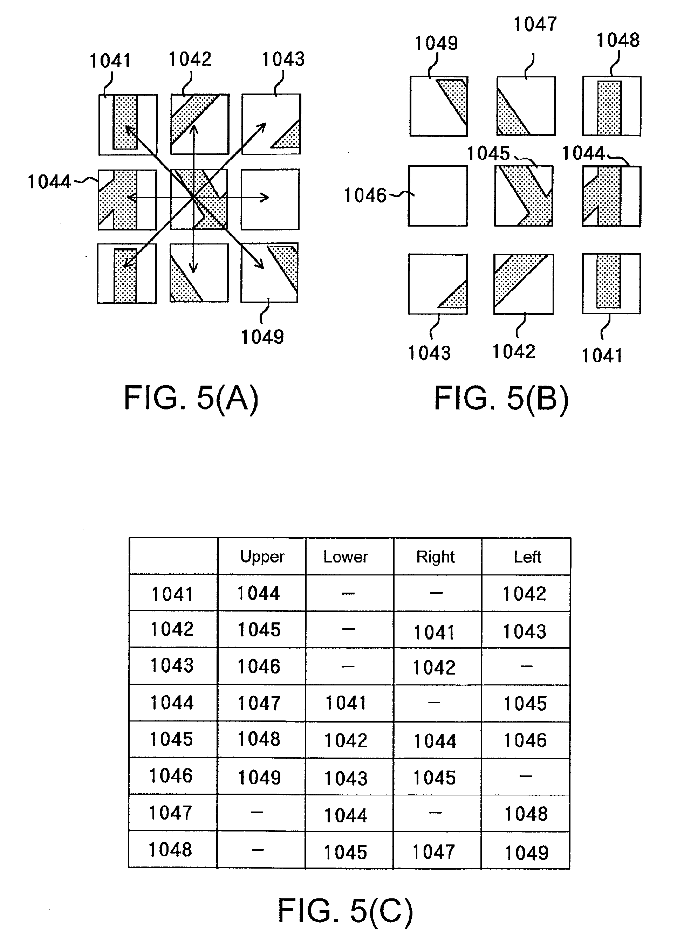

Figs. 5(A) and (B) are conceptual diagrams that illustrate this rearrangement process. As shown in Fig. 5(A), the respective partial object images that are arranged in a point symmetric manner with the central lens portion 101a as the center are rearranged so that the same image as the above-described entire object image that is obtained by a single lens will be obtained.

The arrows shown in Fig. 5(A) indicate the movement destinations of the rearrangement of the respective partial object images, and by rearranging the respective partial object images in a point symmetric manner about the partial object image corresponding to the central lens portion 101a as the center, an arrangement of partial object images, such as shown in Fig. 5 (B), is obtained.

In actuality, the respective partial object images are not moved for the rearrangement, but for example, the positional relationships of the partial object images to be joined in the combining process, such as the partial object image stored in the memory area 1044 of the image memory 104 coming to the right side of the partial object image stored in the memory area 1045, the partial object image stored in the memory area 1046 coming to the left side of the partial object image stored in the memory area 1045, etc., are stored.

Fig. 5(C) is a table of the correspondence of the partial object images, which, among the nine partial object images stored in the memory areas 1041 to 1049, are stored in the memory areas 1041 to 1048, and the partial object images that are to be positioned at the upper, lower, left, and right sides of these partial object images 1041 to 1049. The positional relationships of this table are stored in the image memory 104 or another unillustrated memory. The process corresponding to rearrangement) is performed based on these positional relationships. These positional relationships are determined at the design stage of the compound eye optical element 101 and this invention is not limited to these particular positional relationships.

After the joining positions of the respective partial object images have thus been determined, the actual joining (combining) of the partial object images is performed. Though various methods have been proposed regarding the joining of images, here, a method of combining by a coordinate conversion of the images based on an affine conversion that includes rotation, magnification/reduction, and parallel movement of the respective partial object images shall be described.

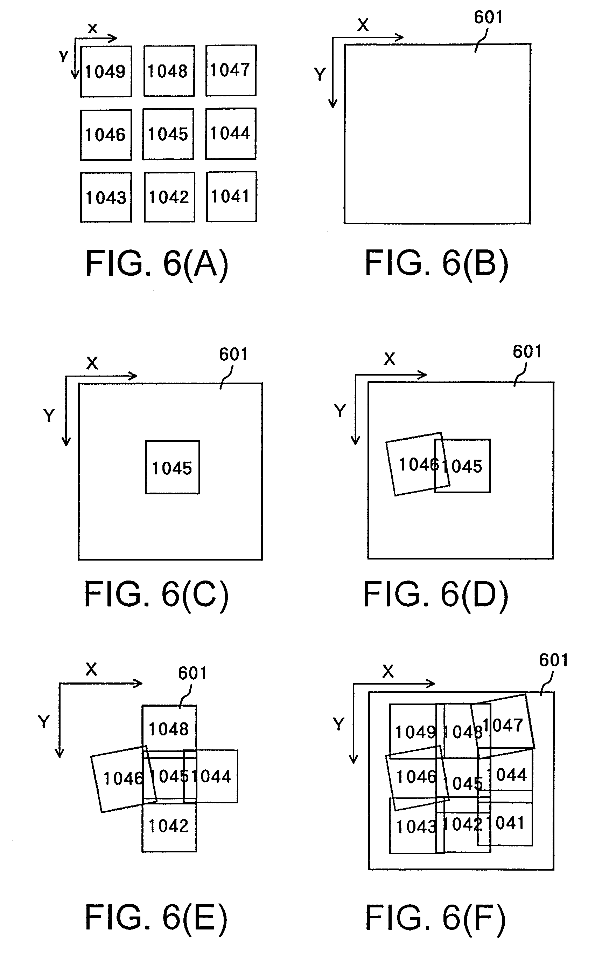

Fig. 6(A) shows the respective partial object images stored in the image memory 104 (in the Figure, the numerical reference 1041 to 1049 indicate that the partial object images are those stored in the memory areas provided with the same numerical references).

Each of the partial object images stored in the image memory 104 has an x-y coordinate system as indicated by the arrows in the Figure. Hereinafter, this coordinate system shall be referred to as the "partial image coordinates."

The image combining circuit 106 stores the combined image at this time in a combined image memory 601 in Figs. 1(A) and 6(B), 601.

The combined image memory 601 has an X-Y coordinate system as indicated by the arrows in Fig. 6(B). This coordinate system shall be referred to as the "combined image coordinates."

In image combination, the partial object images stored in the image memory 104 are joined without gaps and written into the combined image memory 601 to produce a combined image that is a single, continuous image of the entire object. The method therefor shall now be described.

First, using a priorly determined position at substantially the center of the synthetic image memory 601 as a starting point, the partial object image 1045, which was formed by the central lens portion among the plurality of lens portions 101a formed on the compound eye optical element 101 and taken by the corresponding image pickup region, is written into the combined image memory 601 (Fig. 6(C)).

Thereafter, surrounding partial object images are positioned based on this partial object image 1045. Fig. 6(D) is a diagram illustrating how another partial object image is joined adjacently to the left side of the partial object image 1045, and in accordance with the table of Fig. 5(C), the partial object image 1046 is joined adjacently to the left side of the partial object image 1045. In writing into the combined image memory 601, the following affine conversion expression is applied.

$$\begin{bmatrix} X \\ Y \end{bmatrix} = \begin{bmatrix} a & b \\ -b & a \end{bmatrix}\begin{bmatrix} x \\ y \end{bmatrix} + \begin{bmatrix} c \\ d \end{bmatrix} \cdots \quad (1)$$

Here, (x, y) indicates the partial image coordinates, (X, Y) indicates the combined image coordinates, and a, b, c, and d are conversion parameters, with a and b being parameters concerning rotation and c and d being parameters concerning parallel movement.

The values of these conversion parameters are determined by the respective optical axis directions and distance between positions of the respective lens portions 101a formed on the compound eye optical element 101 and are determined and stored in advance in the image memory 104, etc., in accordance with the partial object images corresponding to the respective lens portions.

When the partial object image 1046 has thus been joined to the partial object image 1045 on the combined image memory 601, the combination of other surrounding partial object images centered about the partial object image 1045 are sequentially performed as well.

Fig. 6(E) shows that the partial object images 1042, 1044, 1046, and 1048 are combined at the upper, lower, left, and right sides to the partial object image 1045 at the center. Fig. 6(F) shows that the partial object images 1041, 1043, 1047, and 1049 are combined in diagonal directions to the partial object image 1045 so that nine partial object images of three rows × three columns are combined in the final stage.

The data of the image that has been combined in the above manner (the entire object image) is thereafter processed, as in a normal digital image pickup apparatus, by an unillustrated digital image processing circuit having various functions (such as editing functions, edge enhancement, color conversion, etc.) and output via the interface 107. Specifically, the data is stored and held in the external storage device 108, which may be a magnetic tape, magneto-optical disk, semiconductor medium, etc., displayed on the display device 109, which may be a CRT, liquid crystal display, etc., or transmitted to a remote location via a network transmission line.

Thus by the present embodiment, a single combined image of a wide field region (entire object image) can be obtained from a plurality of partial object images taken through the respective lens portions of the compound eye optical element 101.

(Embodiment 2)

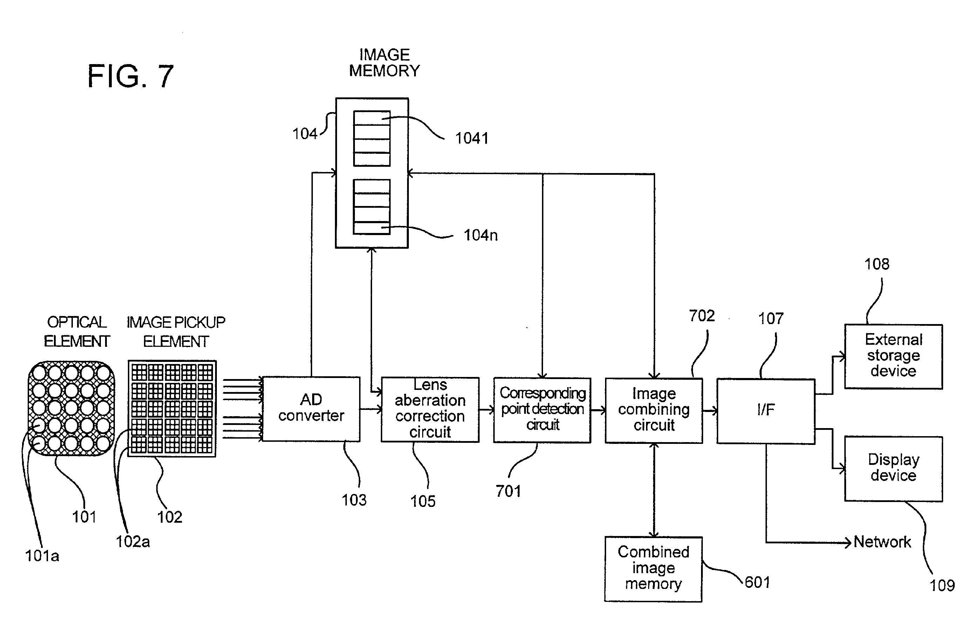

Fig. 7 shows the structure of a compound eye pickup apparatus of Embodiment 2 of the present invention. In Fig. 7, the points that differ from Embodiment 1 are that a corresponding point detection circuit 701 is added and that an image combining circuit 702 differs functionally from the image combining circuit 106 of Embodiment 1. The other components are the same as those of Embodiment 1. Components that are in common to Embodiment 1 are provided with the same numerical references as in Embodiment 1.

The points by which the image combining circuit 702 differs functionally from the image combining circuit 106 of Embodiment 1 are as follows. In Embodiment 1, with regard to the conversion expression concerning the writing positions, etc., for the process of writing the respective partial object images, stored and held in the image memory 104, into the combined image memory 601, the conversion parameters were determined in advance in correspondence to the respective lens portions 101a and the writing and combination were performed in accordance with these parameters.

On the contrary, in the present embodiment, in order to perform a more rigorous image combination, the field region of each lens portion 101a of a compound eye optical element 101 (in other words, the object region taken by each image pickup region 102a of an image pickup element 102) is set so that adjacent regions will have overlapping parts. And from the overlapping parts of the respective partial object images taken by the image pickup regions 102a via the lens portions 101a, the same point of the object (such a point shall be referred to hereinafter as a "corresponding point") is detected to add modifications to the conversion parameters concerning the writing positions, etc., and thereby enable a more precise combined image to be generated.

The operations of the compound eye image pickup apparatus of the present embodiment shall now be described specifically. From the partitioning of an object in terms of field by the compound eye optical element 101 to the photoelectric conversion (taking) of the images of the respective object parts by the respective image pickup regions of the image pickup element 102, the aberration correction of the respective partial object images at a lens aberration correction circuit 105, and the storing and holding of the partial object images in respective memory areas 1041 to 104n of an image memory 104, the operations are the same as those of Embodiment 1.

However, with the present embodiment, parts of the field regions of two adjacent lens portions 101a overlap with each other. That is, partial object images taken by adjacent image pickup regions 102a are taken so that the images include the same point of the object are overlapped.

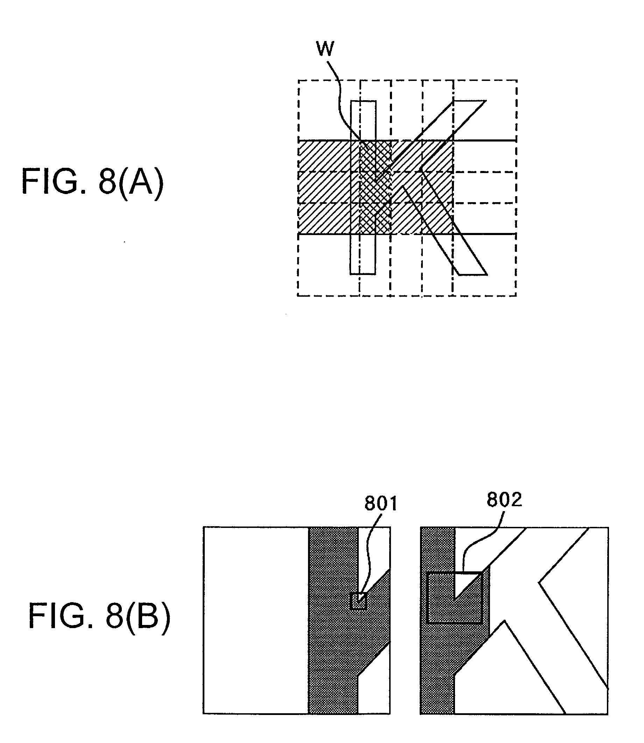

Fig. 8(A) is a diagram showing the manner in which the abovementioned object "K" is taken by nine lens portions 101a with portions of the field regions overlapping each other. In the figure, the region W, at which regions with hatching of two different directions are adjacent each other, indicates a region that is taken in an overlapping manner in two partial object images.

Fig. 8(B) shows partial object images taken by the two image pickup regions indicated by hatching in Fig. 8(A) of "K". From within the two partial object images that have been taken in such a manner and stored and held in the image memory 104, a corresponding point for conversion parameter correction are detected by the corresponding point detection circuit 701.

Generally, Template Matching method is used for the detection of a corresponding point, and this Template Matching method is used in the present embodiment as well.

However, with the compound eye image taking apparatus of the present embodiment, the respective lens portions 101a are positioned in a fixed manner in the compound eye optical element 101. Also as was mentioned in regard to Embodiment 1, since the conversion parameters for conversion from the coordinate system of the respective partial object images to the combined image coordinate system are known approximately in advance from the design values of the optical axis directions and distance between positions of the respective lens portions 101a, the search region for the corresponding point can be narrowed significantly in comparison to a general Template Matching method.

In Fig. 8(B), numerical reference 801 denotes a template. In selecting the template, it is preferable for the template 801 to contain a part of the object, which is characteristic in terms of shape, such as the corner of an edge part, etc., or a part of the object, which is characteristic in terms of texture, such as color, brightness, etc.

In addition to the conversion expression for conversion from the partial image coordinate system to the combined image coordinate system, conversion expressions for conversion to the partial image coordinate systems of different lens portions are determined in advance and stored in the image memory 104, etc.

When the position coordinates of adjacent images have been determined from the central coordinates of template 801, a small region of a predetermined width that is centered about these position coordinates is set as the search region.

In Fig. 8(B), numerical reference 802 indicates the search region of adjacent partial object images. The template 801 is moved sequentially within the search region, the absolute values of the differences between image signals from pixels of the template 801 and image signals from the corresponding pixels in the search region 802 are determined, the total value of the differences for all pixels of the template 801 is calculated, and a template region for which the total value is the minimum is determined as a corresponding point.

At least four such corresponding points are determined, and by solving the simultaneous equations prepared by substituting the coordinates of these points in the above-described expression (1), the affine conversion parameters a, b, c, and d for conversion among the partial images are determined. The affine conversion parameters a, b, c, and d may also be determined by determining four or more corresponding points and using Least Squares method.

The corresponding points of overlapped images among the respective partial object images are thus detected and the parameters for conversion among the partial object images are determined at the corresponding point detection circuit 701.

The determination of the conversion parameters by means of the corresponding point detection circuit 701 may be performed each time images are taken or conversion parameters that have been determined once may be saved and used as conversion parameters for other images.

Next, at the image combining circuit 702, by using parameters for conversion among the respective partial object images and using the partial object image formed by the central lens portion 101a, formed on the compound eye optical element 101, for example, as a reference, adjacent partial object images are joined and written sequentially into the combined image memory 601.

When all partial object images have thus been joined in the final stage, the data of the combined image are output via an interface 107 to an external storage device 108 or a display device 109 as was described with Embodiment 1.

Thus with the present embodiment, since the optical axis directions and the intervals of the respective lens portions 101a of the compound eye optical element 101 are fixed and this can be used to assume an approximate positional relationship of the corresponding points in advance and make the search region for the corresponding point search extremely small, high-speed corresponding point search is enabled and a combined image (entire object image) with higher precision can be obtained by joining together the corresponding points.

(Embodiment 3)

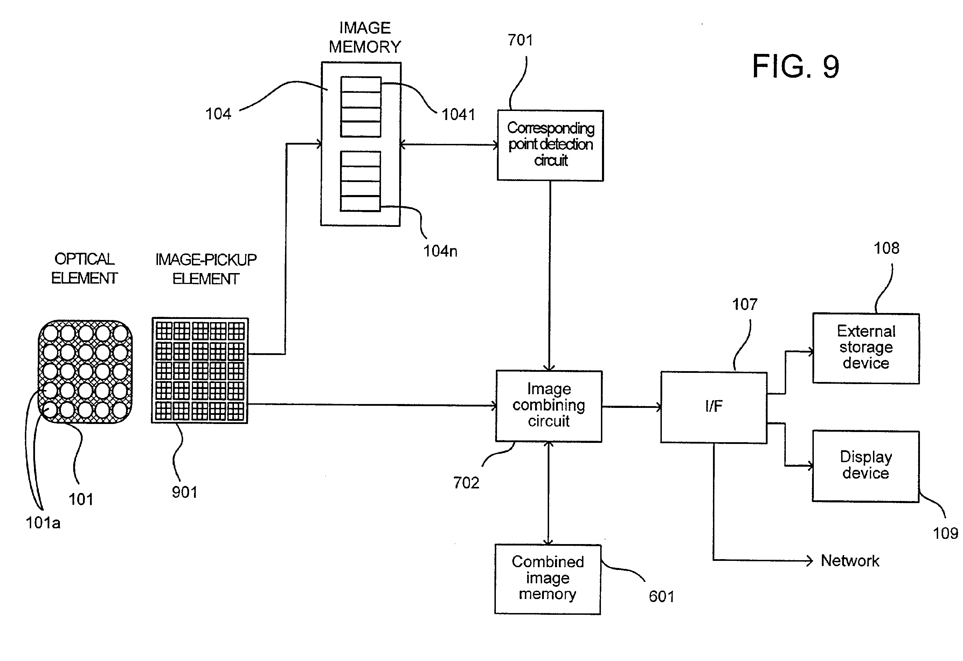

Fig. 9 shows the structure of a compound eye pickup apparatus of Embodiment 3 of the present invention. This embodiment differs from Embodiment 1 and Embodiment 2 in that an image pickup element 901 has its entire surface arranged as a region with which image pickup is enabled and is an optical functional element (also called a "vision sensor" or "vision chip"), in which a circuit for performing signal processing of a taken image is incorporated in a single chip, and in that circuits having an A/D conversion function and a lens aberration function are incorporated in the chip of the image pickup element 901. Components that are in common to Embodiment 1 are provided with the same numerical references as Embodiment 1.

The operations of the compound eye image pickup apparatus of the present embodiment shall now be described specifically. An object is subject to field partition by a compound eye optical element 101. The respective partial object images are taken by the image pickup element 901, that is, by the optical functional element, with which the region enabled for image pickup that is constituted of a CMOS sensor is disposed over the entire surface and the image processing circuit to be described below is incorporated in the same chip.

With the image that has been taken, edge parts are detected by an edge extraction filter of an unillustrated microprocessor that has been incorporated in the chip and the partial object images formed by the respective lens portions are extracted separately. The extracted partial object images are subject to digital conversion by the A/D conversion circuit that is incorporated in the same chip as the microprocessor and the plurality of partial object images are thus stored and held in an image memory 104.

Here, the reading of the partial object images from the CMOS sensor may be performed upon correction of the position on the CMOS sensor by a lens aberration correction function. With the partial object images stored and held in the image memory 104, the corresponding points, described with Embodiment 2, are determined by a corresponding point detection circuit 701 using Template Matching method, etc., and the parameters for conversion among the partial object images are determined. The same method of determining the parameters as that used in Embodiment 2 is used.

When the conversion parameters have been determined, an image combining circuit 702 sequentially joins and writes the plurality of partial object images into a combined image memory 601 and thereby generates a combined image.

When all partial object images have thus been joined in the final stage, the data of the combined image are output via an interface 107 to an external storage device 108 or a display device 109 as was described with Embodiment 1.

Thus with the present embodiment, by making the image pickup element 901 an optical functional element, edge extraction and other processes of heavy computation load can be performed by the microprocessor that has been incorporated in the same chip to enable corresponding point search of even higher speed and thus enable the process of combining the entire object image to be performed at high speed.

(Embodiment 4)

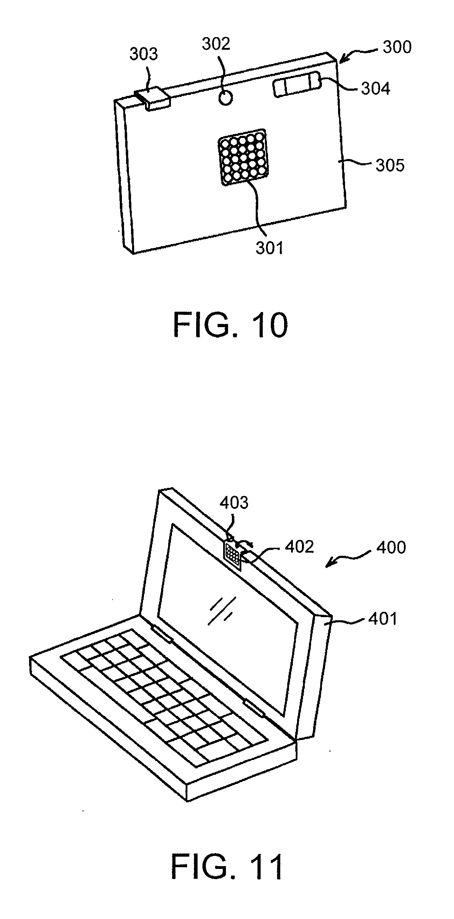

Fig. 10 shows a card type camera (electronic apparatus), which is a compound eye image pickup apparatus of any of Embodiments 1 to 3 described above. This camera 300 is constituted of a card type camera body 305 with a compound eye image pickup optical system 301, comprising a compound eye optical element with an aperture stop, an image pickup element, etc., a viewfinder window 302, a shutter button 303, and a flash 304.

The image taken by the compound eye optical system 301 is subject to a combining process as was described above with Embodiment 1 to 3 and then stored in a combined image memory (see Figs. 1, etc.) inside the camera body 305. The data of this combined image are stored and saved in the hard disk of an unillustrated computer, displayed on a computer screen, or printed out via an interface (see Figs. 1).

(Embodiment 5)

Fig. 11 shows a notebook type or portable type personal computer (electronic equipment) equipped with a compound eye image pickup apparatus of any of the above-described Embodiment 1 to 3.

A compound eye image pickup apparatus 403 is held in a rotatable manner at the upper part of a screen portion 401 of the computer 400. A user can operate the compound eye image pickup apparatus 403 in accordance with computer operations to take a still image or moving image of the user or other object.

As has been described above, with the respective embodiments described above, an entire object image, which is a single, continuous combined image, can be obtained from a plurality of partial object images taken through the respective lens portions of a compound eye optical element.

Also, by performing a process of correction of the aberrations arising from the optical effects of the respective lens portions to be applied to the respective partial object images, an entire object image that is without distortion, etc., due to aberrations and is joined smoothly can be obtained.

Furthermore, with object regions that are respectively taken by each of a plurality of image pickup regions (partial object regions), mutually adjacent object regions may be made to have portions that overlap and a combining process may be performed so that these overlapping parts will be matched.

That is, if the approximate positional relationships of the points that correspond to each other (that is, the corresponding points) of mutually adjacent object regions (partial object images) can be made known by making use of the optical axis directions and intervals of the lens parts positioned at the compound eye optical element being fixed, the range of the corresponding point search can be made extremely small to enable the corresponding point search to be performed at high speed and enable a more precise combined image to be obtained by the joining of the corresponding points.

By making the image pickup element an optical functional element, edge extraction and other processes can be made to be performed by a microprocessor that is incorporated in the same chip to enable the corresponding point search to be performed at even higher speed.

While preferred embodiments have been described, it is to be understood that modification and variation of the present invention may be made without departing from the scope of the following claims.

**Claims**

1. A compound eye image pickup apparatus **characterized by** comprising:

   a compound eye optical element in which a plurality of lens portions is collectively grouped, each of the lens portions facing to an object and having converging optical power;
   an image pickup element performing photoelectric conversion of images of a plurality of regions of the object, which are formed respectively by the plurality of lens portions at mutually different image pickup regions; and
   an image combining circuit being electrically connected to the image pickup element and performing a combining process of combining an image of the entire object from the plurality of images respectively obtained from the plurality of image pickup regions.

2. The compound eye image pickup apparatus according to Claim 1, **characterized in that** the respective optical axes of the plurality of lens portions in the compound eye optical element are tilted with respect to each other.

3. The compound eye image pickup apparatus according to Claims 1 or 2, **characterized in that** the image combining circuit performs a process which corresponds to rearranging the images obtained by the image pickup regions.

4. The compound eye image pickup apparatus according to any one of Claims 1 through 3, **characterized in that**, among the plurality of object regions subject to photoelectric conversion by the plurality of image pickup regions, mutually adjacent object regions have overlapping parts and
   the image combining circuit performs the combining process so that the overlapping parts will be matched.

5. The compound eye image pickup apparatus according to any one of Claims 1 through 4, **characterized by** further comprising:

a correction process circuit, performing a correction process of correcting aberrations on the images obtained by photoelectric conversion at the image pickup regions, which are arisen by optical effects of the lens portions.

6. The compound eye image pickup apparatus according to Claim 5, **characterized by** further comprising:

a storage circuit storing data corresponding respectively to the lens portions for performing the correction process; wherein
the correction process circuit reads the data from the storage circuit and performs the correction process on the plurality of images respectively obtained from the plurality of image pickup regions and
the combining process circuit performs the combining process of combining the plurality of images that have been subject to the correction process.

7. An electrical apparatus, **characterized by** comprising:

a compound eye image pickup apparatus according to any one of Claims 1 through 6; and
an output unit outputting an image data obtained by the compound eye image pickup apparatus.

FIG. 1(A)

IMAGE MEMORY — 104
- 1041
- 104n

AD converter — 103

Lens aberration correction circuit — 105

Image combining circuit — 106

Combined image memory — 601

I/F — 107

External storage device — 108

Display device — 109

Network

OPTICAL ELEMENT — 101
- 101a

IMAGE PICKUP ELEMENT — 102
- 102a

FIG. 1(B)

FIG. 2(A)

FIG. 2(B)

FIG. 3(A)

FIG. 3(B)

FIG. 4(A)

FIG. 4(B)

1041    1042    1043

104n

FIG. 5(A)

FIG. 5(B)

|  | Upper | Lower | Right | Left |
|------|-------|-------|-------|------|
| 1041 | 1044 | — | — | 1042 |
| 1042 | 1045 | — | 1041 | 1043 |
| 1043 | 1046 | — | 1042 | — |
| 1044 | 1047 | 1041 | — | 1045 |
| 1045 | 1048 | 1042 | 1044 | 1046 |
| 1046 | 1049 | 1043 | 1045 | — |
| 1047 | — | 1044 | — | 1048 |
| 1048 | — | 1045 | 1047 | 1049 |

FIG. 5(C)

FIG. 6(A)

FIG. 6(B)

FIG. 6(C)

FIG. 6(D)

FIG. 6(E)

FIG. 6(F)

# FIG. 7

IMAGE MEMORY

104 — 1041 — 104n

OPTICAL ELEMENT 101 (101a)

IMAGE PICKUP ELEMENT 102 (102a)

AD converter 103

Lens aberration correction circuit 105

Corresponding point detection circuit 701

Image combining circuit 702

I/F 107

External storage device 108

Display device 109

Network

Combined image memory 601

EP 1 377 039 A2

FIG. 8(A)

W

FIG. 8(B)

801

802

EP 1 377 039 A2

**FIG. 9**

IMAGE MEMORY

OPTICAL ELEMENT

IMAGE-PICKUP ELEMENT

104

1041

104n

701

Corresponding point detection circuit

101a

101

901

702

Image combining circuit

Combined image memory

601

107

I/F

Network

108

External storage device

Display device

109

FIG. 10

FIG. 11

FIG. 12
(PRIOR ART)

FIG. 13
(PRIOR ART)

## FIG. 14
## (PRIOR ART)

## FIG. 15
## (PRIOR ART)